# EUROPEAN PATENT APPLICATION

(11) **EP 1 201 612 A2**
(43) Date of publication of application: **02.05.2002**
(21) Application number: 01125156.8
(22) Date of filing: 23.10.2001
(51) Int. Cl.: C03B 33/033, C03B 33/03

(54) **System for parting and handling sheets of glass**

(30) Priority: 24.10.2000 IT TO001012
(71) Applicant: BOTTERO S.p.A., 12010 Cuneo (IT)
(72) Inventor: Ghinamo, Paolo, 12012 Boves (IT); Bisotto, Sebastiano, 12012 Boves (IT); Mattio, Roberto, 12026 Piasco (IT)
(74) Representative: Bongiovanni, Simone (IT)

(57) **Abstract**

A system (1) for parting and handling sheets of glass has a movable supporting structure (9) connectable to powered actuating unit (7); a suction cup gripping device (18) carried by the supporting structure (9) and for engaging at least one portion (A)(B) of a sheet of glass having at least one notch line (3); and a parting unit (20) carried by the supporting structure (9) and for parting the sheet (2) along the notch line (3).

## Description

The present invention relates to a system for parting and handling sheets of glass.

In the processing of glass sheets, flat products are formed from a notched sheet of glass and handled on systems in which an extensive surface area of the sheet is first notched to form a number of notch lines defining the various products; the notched sheet is then fed on to a parting table at a parting station where one or more parting devices part the sheet along the various notch lines; and, after each parting operation, the resulting product is unloaded off the parting table and fed either to a further work station or to a storage station where the various products are normally sorted by type, while the rest of the sheet is repositioned on the table and parted along a further notch line.

The sheets are handled at the parting station, and the products transferred and sorted by type at the storage station by means of a number of handling devices, each of which has a gripping device which is selected from a number of devices according to the shape and size of the sheet.

As for the parting units, these are normally fixed permanently to the parting table, and the sheet for parting is repositioned on the table at each parting operation.

Employing one or more parting units and a number of gripping devices, each with its own drive and actuating device, makes known systems extremely complicated, bulky, and expensive both to produce and maintain. Moreover, using parting units which are fixed with respect to the table makes the parting system extremely rigid, so that positioning the sheet is a relatively time-consuming job in direct proportion to the complexity of the notch line pattern and the size, and therefore weight, of the sheet. In many cases, failure to position the sheet accurately with respect to the parting unit results in products varying in quality in terms of shape and surface finish, and which are therefore unmarketable or unsuitable for further processing.

It is an object of the present invention to provide a system for parting and handling sheets of glass, designed to provide a straightforward, low-cost solution to the aforementioned problems, and which, in particular, is independent of the size and/or shape of the starting sheet or resulting products, and of the notch line pattern on the sheet.

According to the present invention, there is provided a system for parting and handling sheets of glass, characterized by comprising a movable supporting structure connectable to powered actuating means; suction cup gripping means carried by said supporting structure and for engaging and retaining at least one portion of a sheet of glass having at least one notch line; and parting means carried by said supporting structure and for parting said sheet along said notch line.

A non-limiting embodiment of the invention will be described by way of example with reference to the accompanying drawings, in which:
Figure 1 shows a view in perspective of a preferred embodiment of the system for parting and handling a sheet of glass according to the present invention;
Figure 2 shows a larger-scale detail of Figure 1.

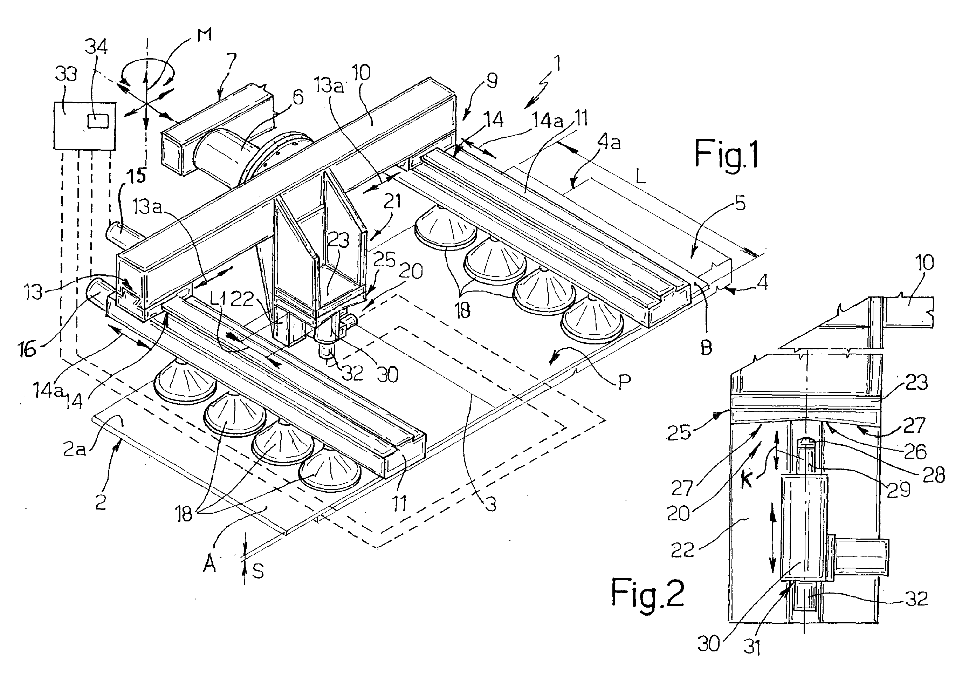

Number 1 in Figure 1 indicates an adaptable system for positioning and parting a sheet 2 of glass, and for subsequently handling the sheet portions resulting from parting sheet 2. In the example described, sheet 2 comprises one notch line 3 of length L, and rests on a support 4 - conveniently a straightforward table or the feed branch of a conveyor belt - defining a supporting surface 5 for supporting sheet 2 so that a peripheral portion 2a of sheet 2 crossed by an end portion of notch line 3 projects from an edge 4a of support 4. Again in the example described, system 1 is connectable to a movable member 6 of a known powered actuating unit 7 (shown only partly), e.g. the wrist of a controlled-axis manipulator, for moving system 1 in space and rotating it about a number of axes.

System 1 comprises an adjustable structure 9, in turn comprising a cross member 10 connected integrally to movable member 6; and two parallel, coplanar arms 11, each of which projects from a portion of cross member 10 and is connected to cross member 10 by two known guide-slide assemblies 13 and 14 so as to move, with respect to cross member 10, in two perpendicular directions 13a and 14a by virtue of respective electric or pneumatic motors 15 and 16. Each arm 11 is fitted with a row of suction cups 18, which are activated independently of suction cups 18 in the other row, lie in a plane P parallel to sheet 2, and, in use, engage a respective portion of sheet 2 defined by notch line 3. In a variation not shown, arms 11 are telescopic to increase the operating range of system 1; and, in a further variation, cross member 10 comprises two telescopic, selectively activated portions, each supporting a respective arm 11 which may or may not be telescopic.

With reference to Figure 1, and particularly Figure 2, an intermediate portion of cross member 10 is fitted with a unit 20 for parting sheet 2 along notch line 3.

More specifically, unit 20 comprises a respective supporting frame 21 fitted integrally to cross member 10 and in turn comprising a bracket 22 fitted integrally to cross member 10 and extending downwards past plane P of suction cups 18; and a bracket 23 fitted integrally to an intermediate portion of bracket 22 and projecting perpendicularly from bracket 22 and parallel to plane P. Bracket 23 is fitted with a stop member 25 forming part of unit 20 and of a length L1, measured parallel to notch line 3, shorter than or at most equal to the length of said end portion of line 3. On the side facing portion 2a of sheet 2, stop member 25 is defined by a concave surface 26 (Figure 2) comprising two flat portions 27 converging towards bracket 23.

As shown in the accompanying drawings, unit 20 also comprises a pressure member 28 facing surface 26 of stop member 25 and located, in use, at said end portion of line 3 to exert parting pressure on the end portion. In the example described, pressure member 28 is of a length, also measured parallel to notch line 3, equal to or shorter than that of stop member 25, and is connected integrally to the output rod 29 of a linear actuator-preferably a pneumatic or hydraulic jack 30 (Figure 2)-connected to bracket 22 directly or, as in the example shown, via a powered guide-slide assembly 31 for adjusting the zero position of pressure member 28 as a function of the thickness S of sheet 2.

Pressure member 28 is moved to and from stop member 25 in direction K according to a predetermined law of motion depending on the characteristics of sheet 2. In the example described, jack 30 is controlled by a proportional solenoid valve 32, which is interposed between jack 30 and a known source (not shown) supplying a compressed fluid to jack 30, and is in turn controlled by a known central control unit 33 as a function of the size of sheet 2 and, in particular, as a function of thickness S of sheet 2 and the length L of notch line 3, which may be sent to central control unit 33 by known detecting devices (not shown) forming part of system 1 or not, or may be stored in a memory 34 of central control unit 33 for storing such information relative to a number of differently sized and/or notched sheets for parting. On the basis of the same information, central control unit 33 also controls actuating unit 7 and, hence, the movement of structure 9.

Operation of system 1 will now be described as of the condition in which the sheet 2 of glass is positioned on support 4 with portion 2a projecting from support 4, suction cups 18 are deactivated, and pressure member 28 is in a lowered rest position separated from stop member 25 by a distance greater than thickness S of sheet 2. As of the above condition, central control unit 33, on the basis of the data received or stored in memory 34, first commands unit 7 to move structure 9 and position stop member 25 and pressure member 28 on the opposite side of portion 2a and astride the relative end portion of notch line 3. Once positioning is completed, central control unit 33 activates solenoid valve 32 to move pressure member 28 gradually towards sheet 2 and force portion 2a of sheet 2 against surface 26 so as to gradually part sheet 2 along notch line 3 and form two flat portions A and B. Simultaneously with the movement of pressure member 28, central control unit 33 also commands unit 7 to raise structure 9 in a direction M and so lift sheet 2 gradually and partly off supporting surface 5. Lifting sheet 2 assists in guiding the break along notch line 3 and so reducing splintering and the likelihood of the break following a course other than the notch line.

Once parting is completed, central control unit 33 commands unit 7 to move parting unit 20 clear of sheet 2; electric motors 15 and 16 are then activated to position each row of suction cups 18 over a respective portion A, B; at which point, a first row of suction cups is activated, and, again by moving structure 9, the corresponding portion A, B is removed off surface 5 and transferred by unit 7 to a further work station or to a storage station and released. Following release, suction cups 18 are repositioned over support 4, and the operations described above are repeated for the other portion A, B.

Alternatively, once parted, both portions A, B are engaged by suction cups 18 and removed simultaneously off support 4.

If the starting sheet 2 has a number of notch lines, e.g. a second notch line on either one of the two portions obtained previously, the portion without the notch line is removed off supporting surface 5, while the other portion is engaged by suction cups 18, is repositioned on the support so that the second notch line extends in the same direction as the previous one, and is then parted. Alternatively, the notched portion is maintained stationary on support 4, and unit 7, moving about the support if necessary, positions parting members 25 and 28 astride the end portion of the second notch line, and the portion is parted in the same way as described previously.

As compared with known solutions, system 1 as described therefore provides for greatly reducing the number of gripping and actuating devices, and therefore production and tool-change cost, as well as the number of drive devices normally employed to operate the various gripping and actuating devices, thus reducing the overall size of the system.

This is substantially due to providing a single supporting structure fitted with both a sheet parting unit, and with gripping members adjustable in position according to the size and/or shape of the sheet and resulting products, and to providing a single drive unit for operating the supporting structure.

By connecting a gripping device and a parting device to the same movable structure, the sheet can be placed on any flat, possibly movable, surface; the sheet or sheet portions to be parted can be maintained stationary on the supporting surface, and the end portions of the various notch lines reached by simply moving the movable structure; the sheet portions can be removed simultaneously or successively, immediately after parting, with no noticeable displacement of the movable structure; and, once engaged, the various portions can be transferred to any point around the support without ever being released by the suction cups.

Using parting members movable about the support and only acting on end portions of the notch lines provides for fast, accurate positioning of the parting members with respect to the notch line, and, above all, for positioning the parting members with no need to adjust the position of or move the sheet on the support in the case of a sheet with a number of notch lines. In the latter case, in fact, the sheet need simply be placed on the support so that an end portion of each notch line projects from the edge of the support, after which, the sheet is parted successively and the portions transferred solely by system 1, which automatically moves over and about support 4.

Applying parting pressure to only the end portions of the notch lines, and according to a law of motion varying according to the thickness of the sheet, the length of the notch line, and, in short, the weight and actual parting resistance of the sheet, provides, as compared with known solutions, for obtaining products of constant and, above all, superior quality in terms of shape and surface finish, and in much less time.

By using a suction cup unit independent of the parting unit and adjustable according to the shape/size of the sheet, the parted sheet can be gripped at a number of points selectable according to the characteristics of the sheet to be moved.

Clearly, changes may be made to system 1 as described herein without, however, departing from the scope of the present invention. In particular, the relative position of suction cups 18 and parting unit 20 may differ; parting unit 20 may be formed otherwise than as described by way of example; suction cups 18 may be positioned otherwise than as shown; supporting structure 9 may be formed differently; and unit 20 may be movable with respect to and along cross member 10.

## Claims

1. A system (1) for parting and handling sheets of glass, **characterized by** comprising a movable supporting structure (9) connectable to powered actuating means (7); suction cup gripping means (18) carried by said supporting structure (9) and for engaging and retaining at least one portion (A)(B) of a sheet (2) of glass having at least one notch line (3); and parting means (20) carried by said supporting structure (9) and for parting said sheet (2) along said notch line (3).

2. A system as claimed in Claim 1, **characterized in that** said parting means (20) are separate from said suction cup gripping means (18).

3. A system as claimed in Claim 1 or 2, **characterized in that** said parting means (20) extend at least partly between said suction cup gripping means (18).

4. A system as claimed in one of Claims 1 to 3, **characterized in that** said parting means (20) extend, in use, astride said notch line (3).

5. A system as claimed in Claim 4, **characterized in that** said parting means (20) are of such transverse dimensions as to only extend, in use, astride an end portion of said notch line (3).

6. A system as claimed in any one of the foregoing Claims, **characterized in that** said parting means (20) comprise a stop member (25) connected integrally to said supporting structure (9), and a pressure member (28) facing the stop member (25); actuating means (30) being provided to move said pressure member (28) and said stop member (25) with respect to each other to part said sheet (2).

7. A system as claimed in Claim 6, **characterized in that** said stop member (25) is defined, on the side facing the pressure member (28), by a concave surface (26) against which the sheet (2) rests.

8. A system as claimed in Claim 7, **characterized in that** said concave surface comprises two converging flat portions (27).

9. A system as claimed in any one of the foregoing Claims, **characterized by** comprising adjusting means (31) for adjusting a zero position of said pressure member (28) with respect to said stop member (25).

10. A system as claimed in any one of the foregoing Claims, **characterized by** also comprising control means (33) for controlling said parting means (20) as a function of at least one characteristic of said sheet (2).

11. A system as claimed in any one of the foregoing Claims, **characterized by** comprising adjusting means (13, 14, 15, 16) for adjusting the position of said suction cup gripping means (18) with respect to said parting means (20).

12. A system as claimed in any one of the foregoing Claims, **characterized in that** said suction cup gripping means comprise at least two supporting arms (11), each supporting at least one suction cup (18); said parting means (20) extending at least partly between said arms (11).
